# EUROPEAN PATENT APPLICATION

(11) **EP 4 586 510 A1**
(43) Date of publication of application: **16.07.2025**
(21) Application number: 24151394.4
(22) Date of filing: 11.01.2024
(51) Int. Cl.: H04B 5/72, H04W 4/80

(54) **WAKE-UP DEVICE AND CORRESPONDING OPERATING METHOD**

(71) Applicant: NXP B.V., 5656 AG Eindhoven (NL)
(72) Inventor: Veit, David, 5656AG Eindhoven (NL); Graeber, Frank, 5656AG Eindhoven (NL); Tockner, Hubert, 5656AG Eindhoven (NL); Leong, Frank, 5656AG Eindhoven (NL)
(74) Representative: Krott, Michel

(57) **Abstract**

In accordance with a first aspect of the present disclosure, a wake-up device is provided, comprising: an NFC unit; a wake-up unit operatively coupled to the NFC unit; wherein the NFC unit is configured to operate in a wake-up receiver mode, in which the NFC unit is configured to receive a wake-up signal from an external NFC device; wherein the NFC unit is further configured to provide said wake-up signal to the wake-up unit; and wherein the wake-up unit is configured to wake up one or more external functional components in response to receiving the wake-up signal from the NFC unit. In accordance with a second aspect of the present disclosure, a corresponding method of operating a wake-up device is conceived.

## Description

### TECHNICAL FIELD

The present disclosure relates to a wake-up device. Furthermore, the present disclosure relates to a corresponding method of operating a wake-up device.

### BACKGROUND

Different types of devices may be used for accessing objects or assets, such as vehicles and buildings. For example, classic passive keyless entry systems use low frequency (LF) magnetic tracking (e.g., at an operating frequency of 125 kHz) to facilitate said access. Alternatively, mobile consumer devices such as mobile phones may be used for this purpose, in order to facilitate hands-free access. Such consumer devices typically employ a combination of different technologies, such as near field communication (NFC), Bluetooth (BT) communication and ultra-wideband (UWB) communication. It is noted that the acronym BT may refer to Bluetooth low energy. Furthermore, key fobs are envisaged which also employ such a combination of technologies, in order to support a hands-free access to the aforementioned objects. However, it may be difficult to keep the power consumption of such a hands-free key fob at an acceptable level. Similarly, it may be difficult to keep the power consumption of other small devices, such as Internet of Things (IoT) sensors and earbuds, at an acceptable level.

### SUMMARY

In accordance with a first aspect of the present disclosure, a wake-up device is provided, comprising: an NFC unit; a wake-up unit operatively coupled to the NFC unit; wherein the NFC unit is configured to operate in a wake-up receiver mode, in which the NFC unit is configured to receive a wake-up signal from an external NFC device; wherein the NFC unit is further configured to provide said wake-up signal to the wake-up unit; and wherein the wake-up unit is configured to wake up one or more external functional components in response to receiving the wake-up signal from the NFC unit.

In one or more embodiments, the NFC unit is configured to operate with a high sensitivity at a frequency of 13.56 MHz or approximately 13.56 MHz.

In one or more embodiments, the NFC unit is configured to receive said wake-up signal within a range of approximately 2 meters of the external NFC device.

In one or more embodiments, the wake-up receiver mode is a receive-only operating mode.

In one or more embodiments, the NFC unit is further configured to operate in a regular NFC mode.

In one or more embodiments, the NFC unit is configured to use the same antenna for the wake-up receiver mode as for the regular NFC mode.

In one or more embodiments, the one or more external functional components include a UWB communication unit.

In one or more embodiments, the one or more external functional components include a Bluetooth communication unit.

In one or more embodiments, the wake-up device further comprises a processing unit operatively coupled to the NFC unit, wherein said processing unit is configured to derive a received signal strength indicator (RSSI) from the wake-up signal.

In one or more embodiments, the wake-up signal comprises a user device identifier.

In one or more embodiments, a user device comprises the wake-up device of any preceding claim.

In one or more embodiments, the user device is a key fob for accessing an object such as a vehicle.

In one or more embodiments, the user device is an Internet of Things (IoT) sensor.

In accordance with a second aspect of the present disclosure, a method of operating a wake-up device is conceived, comprising: operating a near field communication, NFC, unit included in the wake-up device in a wake-up receiver mode, in which the NFC unit is configured to receive a wake-up signal from an external NFC device; providing, by the NFC unit, said wake-up signal to a wake-up unit included in the wake-up device; waking up, by the wake-up unit, one or more external functional components in response to receiving the wake-up signal from the NFC unit.

### DESCRIPTION OF DRAWINGS

Embodiments will be described in more detail with reference to the appended drawings.
Fig. 1A shows an example of wake-up rate measurements in a near-ideal scenario.
Fig. 1B shows an example of wake-up rate measurements in a real-life scenario.
Fig. 2 shows an illustrative embodiment of a wake-up device.
Fig. 3 shows an illustrative embodiment of a method of operating a wake-up device.

### DESCRIPTION OF EMBODIMENTS

Hands-free access systems employing a mobile consumer device (e.g., a mobile phone) as a primary means to access a vehicle are intended to provide the same quality of user convenience as classic passive keyless entry systems using a key fob. These access systems are typically based on a combination of technologies, more specifically NFC, BT and UWB. Vehicle manufacturers have started to bring these systems to the market and more and more systems comply with technical standards, such as the Car Connectivity Consortium (CCC) Digital Key Release 3 specification. Classic passive keyless entry systems use key fobs, which employ LF magnetic tracking (e.g. 125 kHz) to meet important requirements regarding the battery life time and localization accuracy. Such passive keyless entry system have been available on the market since many years.

Many vehicle manufacturers support passive keyless entry systems using key fobs as well as access systems using mobile phones, to support both hands-free key fob and hands-free mobile phone access. Currently, battery-supplied key fobs using a combination of NFC, BT and UWB are envisaged to simplify the overall system and reduce the system bill of material. Such key fobs may be equipped with a coin cell battery (e.g., CR2032), for example. However, it may be difficult to keep the power consumption of such key fobs low, in order to enable an acceptable battery life time of two years or more. Similarly, it may be difficult to keep the power consumption of other small devices having integrated batteries, such as Internet of Things (IoT) sensors and earbuds, low in order to enable an acceptable life time of said batteries. To minimize the power consumption, such key fobs or other small devices are often equipped with a wake-up receiver, which is able to wake up the main functional components of the devices only when necessary, to keep the devices in a low-power state as long as possible. However, such a wake-up receiver may not have a desired performance in terms of the wake-up rate. Consequently, the device in which it is integrated may not wake up when this is necessary.

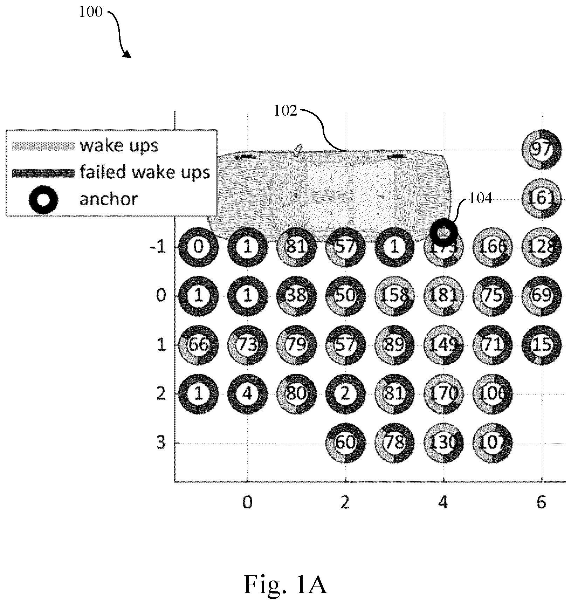

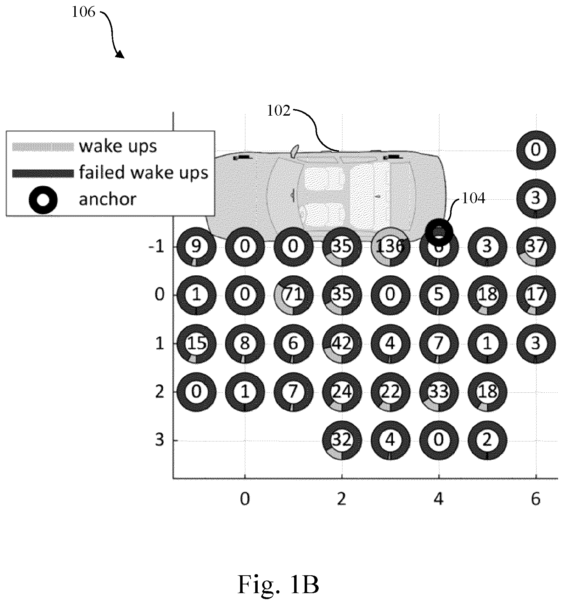

Figs. **1A** **and** **1B** show an example of wake-up rate measurements in a near-ideal scenario 100 and an example of wake-up rate measurements in a real-life scenario 106, respectively. In particular, the measurement results of a typical wake-up receiver are shown. Fig. 1A shows the wake-up rate measurements in a near-ideal scenario 100, i.e. with a mobile node that includes the wake-up receiver placed on a foam block to simulate ideal conditions, at different positions around a vehicle 102 that includes an anchor 104. Fig. 1B shows the wake-up rate measurements in a real-life scenario 106, with said mobile node in the back pocket of a test person, at the same positions around the vehicle 102. It can be seen that the wake-up rate of the receiver at a frequency of 2.4 GHz is poor and insufficient to meet the requirements for an access system.

Now discussed are a wake-up device and a corresponding method of operating a wake-up device, which facilitate keeping the power consumption of a user device in which the wake-up device is installed at an acceptable level, while avoiding or reducing the risk of failed wake-ups of one or more functional components of said user device.

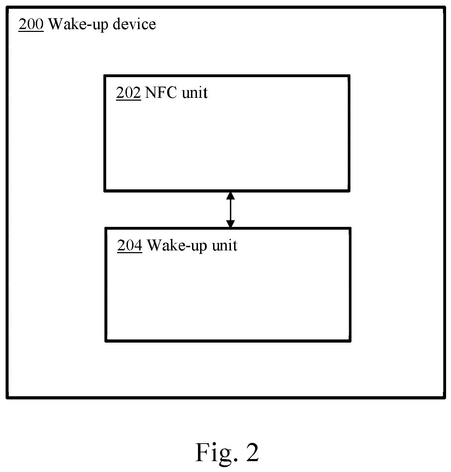

Fig. 2 shows an illustrative embodiment of a wake-up device 200. The wake-up device 200 comprises an NFC unit 202 and a wake-up unit 204 which are operatively coupled to each other. It is noted that, although the NFC unit 202 and the wake-up unit 204 are shown as separate components, they can also be integrated into a single unit or component, such as an NFC chip. The NFC unit 202 is configured to operate in a wake-up receiver mode, in which it is configured to receive a wake-up signal from an external NFC device (not shown). Furthermore, the NFC unit 202 is configured to provide said wake-up signal to the wake-up unit 204. Furthermore, the wake-up unit 204 is configured to wake up one or more external functional components (not shown) in response to receiving the wake-up signal from the NFC unit 202. It is noted that the term "external" means that the functional components do not form part of the wake-up device 200. However, they may be integrated into a user device of which the wake-up device 200 also forms part. In that case, the wake-up device 200 may function as a wake-up receiver to wake the functional component or components of the user device. By receiving a wake-up signal through an NFC channel and waking up the functional component or components in response to receiving said wake-up signal, the power consumption of a user device in which the wake-up device 200 is integrated (or to which it is coupled) may be kept at an acceptable level, while avoiding or reducing the risk of failed wake-ups of the functional component or components.

In one or more embodiments, the NFC unit is configured to operate with a high sensitivity at a frequency of 13.56 MHz or approximately 13.56 MHz. In this way, wake-up events may be triggered at a suitable distance of the external NFC device, while enabling operation at a standardized operating frequency of NFC. Furthermore, in one or more embodiments, the NFC unit is configured to receive said wake-up signal within a range of approximately 2 meters of the external NFC device. This range is particularly suitable for triggering wake-up events. However, depending on the use case another range may be more suitable. For example, a longer distance than 2 meters may be more suitable in some use cases. In one or more embodiments, the wake-up receiver mode is a receive-only operating mode. In this way, the power consumption may be further reduced, since no transmit operations will be performed.

In one or more embodiments, the NFC unit is further configured to operate in a regular NFC mode. In this way, regular NFC, which is typically performed at distances up to 10 centimeters, is also facilitated. Furthermore, in one or more embodiments, the NFC unit is configured to use the same antenna for the wake-up receiver mode as for the regular NFC mode. In this way, the system cost may be reduced, specifically by reusing an existing antenna which is already available for carrying out regular NFC (e.g., which supports tap-to-unlock or tap-to-pay functionality) for wake-up operations. In one or more embodiments, the one or more external functional components include a UWB communication unit. In this way, UWB ranging operations may be triggered by the NFC-based wake-up device. Furthermore, in one or more embodiments, the one or more external functional components include a BT communication unit. In this way, BT operations may be triggered by the NFC-based wake-up device.

In one or more embodiments, the wake-up device further comprises a processing unit operatively coupled to the NFC unit, wherein said processing unit is configured to derive a received signal strength indicator (RSSI) from the wake-up signal. Again, it is noted that the NFC unit, the wake-up unit and processing unit do not need to be implemented as separate components. More specifically, they can also be integrated into a single unit or component, such as an NFC chip. By deriving an RSSI from the NFC wake-up signal, additional functions may be enabled, such as an NFC-based key fob inside-outside detection for engine start authorization and an improved sanity checking of a potential RSSI, time-of-flight-based ranging measurements or phase-based ranging measurements via a BT link. More specifically, the RSSI of the wake-up signal may be compared to a potential RSSI, time-of-flight or phase-based ranging result from the BT communication. In this way, the validity of the signals can be checked, because it is more difficult to attack two communication links at the same time. For example, if the two measurements yield significantly different results there might be an attack on one of the channels. Furthermore, in one or more embodiments, the wake-up signal comprises a user device identifier. In this way, the wake-up operation may be targeted at a specific user device, while preventing unnecessary wake-ups of other devices in the vicinity.

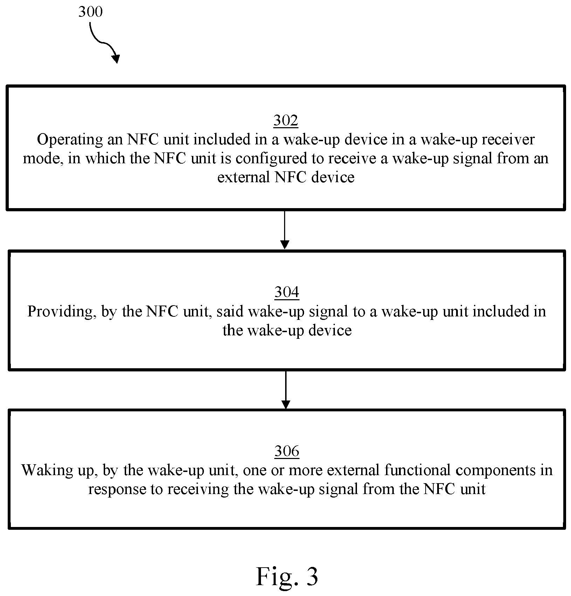

Fig. 3 shows an illustrative embodiment of a method 300 of operating a wake-up device. The method 300 comprises the following steps. At 302, an NFC unit included in a wake-up device is operated in a wake-up receiver mode, in which the NFC unit is configured to receive a wake-up signal from an external NFC device. At 304, the NFC unit provides said wake-up signal to a wake-up unit included in the wake-up device. Furthermore, at 306, the wake-up unit wakes up one or more external functional components in response to receiving the wake-up signal from the NFC unit. As mentioned above, by receiving a wake-up signal through an NFC channel and waking up the functional component or components in response to receiving said wake-up signal, the power consumption of a user device may be kept at an acceptable level, while avoiding or reducing the risk of failed wake-ups of the functional component or components.

The presently disclosed wake-up device facilitates implementing an ultra-low-power device wake-up system, which in turn enables that key fobs, which may be used in access systems based on NFC, BT and UWB, support a hands-free operation and have a battery lifetime of two years or more. In particular, the wake-up device may be implemented as a special NFC IC, which functions as a wake-up radio in the key fob. The wake-up functionality may be based on 13.56 MHz technology with enough sensitivity to enable a wake-up range of approximately 2 meters, using for example regular NFC door handle modules in a vehicle which can also perform the NFC communication.

The ISO/IEC14443-2 standard specifies a minimum field strength of 1.5 Aim which should be strong enough for a NFC base station to perform a bidirectional communication over a distance of some centimeters. However, the achievable base station to NFC receiver communication distance may in practice be significantly larger. Furthermore, for a wake-up functionality the communication does not need to be bidirectional. Therefore, NFC communication over a larger distance may facilitate enabling an efficient wake-up function. In a practical implementation, an NFC wake-up IC may have two modes of operation. The first mode may be a regular NFC mode, in which communication may be performed at a distance up to 10 centimeters, for example. The second mode may be a receive-only wake-up radio mode, in which the IC operates at low power but with a high sensitivity.

Waking up a user device using NFC with an operating frequency of 13.56 MHz may have the following advantages. The wake-up receiver is mainly using the magnetic near field rather than the radiated transverse electromagnetic (TEM) waves. The transition from the near field to the far field of 13.56 MHz radio waves may be at a distance of approximately 3.5 meters, using coil antennas fitting into a key fob, leading to a very narrow transition range from 0% wake-up to 100% wake-up probability. Furthermore, the magnetic field distribution falls with 60 dB per decade, which enables a sharp distinction of the wake-up range and, if applicable, a high localization accuracy based on the RSSI. Furthermore, the metal shield penetration is limited compared to existing LF systems, which is beneficial for an accurate object inside-outside detection. In addition, the human body attenuation is lower than for electro-magnetic fields in the GHz range, and therefore the system may be less impacted by shielding by the human body. Furthermore, due to the inherent short range of the system it suffers less from multipath effects due to different environments compared to radios operating at higher frequencies. This property is important for vehicle access systems due to the unpredictable environment when entering the vehicle (e.g., a crowded parking lot, a car on a green field, a basement garage, possibly combined with one or more human bodies in the vicinity). In addition, it may become easier to meet the tradeoff between power consumption and sensitivity as the relative bandwidth for receive filters is higher, resulting in lower filter orders compared to higher frequency systems. Furthermore, due to the short range nature of the technology, the interference with other systems may be limited. It is noted that the boundary between the near field and the far field may also be different from 3.5 meters. This boundary depends among others on the properties of the antenna, such as the resonant frequency and dimensions of the antenna.

In accordance with the present disclosure, an NFC radio may be enhanced with wake-up functionality to produce a key fob with NFC, BT and UWB capability, with a low receiver power consumption and a maximum compatibility to existing standards. Optionally, the NFC radio can be used as standalone device for low cost solutions. The key fob may be used for a range detection within a so-called Thatcham zone in passive entry authorization applications, possibly as a low complexity standalone system. The Thatcham zone is a zone which has been defined by the Motor Insurance Repair Research Centre (MIRRC). The Thatcham zone is defined as an operating range around a vehicle, which does not exceed 2 meters from any point around the perimeter of the vehicle. Furthermore, the low-power functionality may be an important feature of access systems, in which BT and UWB are triggered for secure ranging operations. In addition, the lifetime of the battery (e.g., a CR2032 coin cell battery) may be extended to two years or more. Furthermore, the enhanced NFC radio may be compatible with existing NFC standards (ISO 19092, ISO 21481, ISO 14443), and therefore the wake-up functionality may be implemented in combination with regular NFC functionality. Furthermore, the enhanced NFC radio may be compatible with the aforementioned CCC Digital Key Release 3 specification, and therefore the wake-up functionality does not interfere with mobile phone-based access systems. In addition, a key fob inside-outside detection may be implemented for an engine start authorization; this detection may be based on an RSSI comparison of inside and outside modules.

The enhanced NFC radio device may be able to receive wake-up packets via an NFC channel at distances of up to 2 meters. These wake-up packets may contain an identifier used to wake up only specific devices that use the same identifier for reception, thereby preventing unnecessary wake-ups of other devices in the vicinity. Furthermore, the enhanced NFC radio device may use the same antenna as is used for regular NFC. Therefore, it may be designed in such a way that the receiver is able to operate in two modes, i.e. a low-power wake-up mode and a regular NFC mode. Furthermore, it may be designed in such a way that the field strengths used in regular NFC operations do not damage the wake-up radio part of the device.

Based on the presently disclosed wake-up device, several use cases and corresponding system architectures may be envisaged. For instance, in a first use case, a handsfree access system may be envisaged, in particular for accessing a vehicle. The system comprises a plurality of anchors mounted in or attached to the vehicle, as well as a mobile node (e.g., a smart phone or smart watch) functioning as an access device. In many cases, access without the use of a smart phone should also be possible. In those cases, a fob or token is needed. The presently disclosed wake-up device may be integrated in such a key fob. The key fob may listen to wake-up packets using the NFC-based wake-up radio channel. Once a matching wake-up packet has been received, a BT device of the key fob may be woken up to perform the authentication and session initialization as mentioned in different technical standards, such as the CCC standard. Furthermore, once a matching wake-up packet has been received, a UWB device of the key fob may be woken up. This UWB device may perform a secure ranging after the authentication and session initialization has been performed by the BT device. Furthermore, the UWB device may perform said authentication and session initialization itself, before performing the secure ranging. In that case, the key fob does not need to be equipped with the BT device, which lowers its cost. It is noted that the authentication, session initialization and secure ranging are compatible with the existing standards, such that the presently disclosed wake-up device may be fully integrated into existing access systems.

In a second use case, access to an object such as a vehicle may be controlled using a combination of NFC and BT communication. Thereby, a low-cost access system may be realized, which does not include UWB functionality. Similar to the access system described with reference to the first use case, the NFC-based wake-up device may be used to wake up the BT device in order to perform an authentication operation. In addition, the NFC-based wake-up device may provide RSSI information to the BT device. Subsequently, the BT device may use this information for an improved sanity checking of potential RSSI, time-of-flight-based ranging measurements and/or phase-based ranging measurements via the BT link.

In a third use case, NFC may be used as a robustness improvement for the BT communication. In that case, an already existing BT advertiser scanner system may be enhanced for additional robustness. Such a system periodically advertises and scans via the BT link. As the scanning usually needs more power than the advertising, the roles of the devices are often determined due to the availability of power, potentially blocking the possibility of having a key fob as a scanner. Duty cycling is often used to reduce the power consumption, but sometimes this leads to inacceptable response times (latency) of the system. Furthermore, increased response times of a BT system can also be caused by excessive interference on the shared BT channel. Then, the system may be enhanced with an NFC-based wake-up device, which scans for wake-up packets in parallel to the BT device. Thus, for longer distances the BT advertising scanner scheme is used for the wake-up. However, if this scheme fails to wake up the system in time due to duty cycling or interference, the NFC wake-up radio may be utilized as a backup solution. For example, the long-distance wake-up enabled by BT communication might be used for a welcome light of a car and to unlock the car. However, if the BT-based wake-up does not work the welcome light of the car might not be activated, but due to the short-range NFC backup radio link the car can still be unlocked hands-free at acceptable response time/latency if the person is close enough to open it.

It is noted that typical key fobs employing a combination of NFC, BT communication and UWB communication, use a standard BT connection establishment method to establish a data connection between the key fob and a vehicle. Such a typical key fob is often optimized to trade off current consumption for system latency. However, this typical key fob does not meet the low-power requirements of a key fob, because the standard BT connection establishment method requires that the key fob continuously transmits BT advertising packets. To improve this, a motion sensor might be used, but in that case the cost of the key fob would be increased. In contrast, when the presently disclosed wake-up device is used, the low-power requirements of a key fob may be met without significantly increasing the cost of the key fob. In particular, an NFC device may be enhanced with an ultra-low-power wake-up functionality to build a smart fob with a battery lifetime of more than 2 years and a high degree of compatibility with existing standards. Furthermore, no additional components need to be included in the system. Using the presently disclosed wake-up device, the average current consumption of the key fob may be lowered significantly compared to a key fob that uses the standard BT connection establishment method. Furthermore, due to the ultra-low-power operation the receiver may not need to use very low duty cycles, which may reduce the latency of the wake-up device significantly.

The 2.4 GHz frequency band is typically occupied by many devices (e.g., BT devices, WLAN devices) which can enlarge the time for a connection establishment in an unpredictable way up to unacceptable levels. Furthermore, advertising intervals for BT need to be adjusted for a trade-off between interference, power consumption and latency. However, the impact from other 13.56 MHz third party devices in the environment is limited due to the short transmission range, and therefore the probability of interference is low. For this reason, the presently disclosed wake-up device may suffer from less interference than, for example, devices operating in the 2.4 GHz frequency band.

Different applications of the presently disclosed wake-up device may be envisaged. For example, the low-power device wake-up functionality may be used in addition to a standard BT device connection establishment between a key fob and a car. When a user walks away from the car and the car is automatically locked, the system may switch off BT advertising and scanning when the key fob leaves a predefined walk-away zone, in order to force the key fob to enter a mode in which it only listens to NFC wake-up signals. In this way, the power consumption of the key fob may be reduced significantly. In another example, data transmissions may be performed from the car to the key fob using the 13.56 MHz radio link, using an application-optimized radio protocol (e.g., a low data rate). This data link may replace a 2.4 GHz BT data receiver on the fob side. In yet another example, the key fob may use magnetic field strength RSSI measurements for an accurate key fob localization, thereby replacing or augmenting other localization solutions (e.g., BT channel sounding, UWB-based time-of-flight measurements).

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE NUMBERS

- 100: wake-up rate measurements in a near-ideal scenario
- 102: vehicle
- 104: anchor node
- 106: wake-up rate measurements in a real-life scenario
- 200: wake-up device
- 202: NFC unit
- 204: wake-up unit
- 300: method of operating a wake-up device
- 302: operating an NFC unit included in a wake-up device in a wake-up receiver mode, in which the NFC unit is configured to receive a wake-up signal from an external NFC device
- 304: providing, by the NFC unit, said wake-up signal to a wake-up unit included in the wake-up device
- 306: waking up, by the wake-up unit, one or more external functional components in response to receiving the wake-up signal from the NFC unit

## Claims

1. A wake-up device, comprising:
a near field communication, NFC, unit;
a wake-up unit operatively coupled to the NFC unit;
wherein the NFC unit is configured to operate in a wake-up receiver mode, in which the NFC unit is configured to receive a wake-up signal from an external NFC device;
wherein the NFC unit is further configured to provide said wake-up signal to the wake-up unit; and
wherein the wake-up unit is configured to wake up one or more external functional components in response to receiving the wake-up signal from the NFC unit.

2. The wake-up device of claim 1, wherein the NFC unit is configured to operate with a high sensitivity at a frequency of 13.56 MHz or approximately 13.56 MHz.

3. The wake-up device of claim 1 or 2, wherein the NFC unit is configured to receive said wake-up signal within a range of approximately 2 meters of the external NFC device.

4. The wake-up device of any preceding claim, wherein the wake-up receiver mode is a receive-only operating mode.

5. The wake-up device of any preceding claim, wherein the NFC unit is further configured to operate in a regular NFC mode.

6. The wake-up device of claim 5, wherein the NFC unit is configured to use the same antenna for the wake-up receiver mode as for the regular NFC mode.

7. The wake-up device of any preceding claim, wherein the one or more external functional components include an ultra-wideband, UWB, communication unit.

8. The wake-up device of any preceding claim, wherein the one or more external functional components include a Bluetooth communication unit.

9. The wake-up device of any preceding claim, further comprising a processing unit operatively coupled to the NFC unit, wherein said processing unit is configured to derive a received signal strength indicator, RSSI, from the wake-up signal.

10. The wake-up device of any preceding claim, wherein the wake-up signal comprises a user device identifier.

11. A user device comprising the wake-up device of any preceding claim.

12. The user device of claim 11, being a key fob for accessing an object such as a vehicle.

13. The user device of claim 11, being an Internet of Things (IoT) sensor.

14. A method of operating a wake-up device, comprising:
operating a near field communication, NFC, unit included in the wake-up device in a wake-up receiver mode, in which the NFC unit is configured to receive a wake-up signal from an external NFC device;
providing, by the NFC unit, said wake-up signal to a wake-up unit included in the wake-up device;
waking up, by the wake-up unit, one or more external functional components in response to receiving the wake-up signal from the NFC unit.

## Amended claims

### Amended claims in accordance with Rule 137(2) EPC.

1. A wake-up device (200) for use in a key fob, comprising:
a near field communication, NFC, unit (202);
a wake-up unit (204) operatively coupled to the NFC unit (202);
wherein the NFC unit (202) is configured to operate in a wake-up receiver mode, in which the NFC unit (202) is configured to receive a wake-up signal from an external NFC device;
wherein the NFC unit (202) is further configured to provide said wake-up signal to the wake-up unit (204); and
wherein the wake-up unit (204) is configured to wake up one or more external functional components in response to receiving the wake-up signal from the NFC unit (202);
**characterized in that** the wake-up device (200) further comprises a processing unit operatively coupled to the NFC unit (202), wherein said processing unit is configured to derive a received signal strength indicator, RSSI, from the wake-up signal.

2. The wake-up device (200) of claim 1, wherein the NFC unit (202) is configured to operate with a high sensitivity at a frequency of 13.56 MHz or approximately 13.56 MHz.

3. The wake-up device (200) of claim 1 or 2, wherein the NFC unit (202) is configured to receive said wake-up signal within a range of approximately 2 meters of the external NFC device.

4. The wake-up device (200) of any preceding claim, wherein the wake-up receiver mode is a receive-only operating mode.

5. The wake-up device (200) of any preceding claim, wherein the NFC unit (202) is further configured to operate in a regular NFC mode.

6. The wake-up device (200) of claim 5, wherein the NFC unit (202) is configured to use the same antenna for the wake-up receiver mode as for the regular NFC mode.

7. The wake-up device (200) of any preceding claim, wherein the one or more external functional components include an ultra-wideband, UWB, communication unit.

8. The wake-up device (200) of any preceding claim, wherein the one or more external functional components include a Bluetooth communication unit.

9. The wake-up device (200) of any preceding claim, wherein the wake-up signal comprises a user device identifier.

10. A method (300) of operating a wake-up device for use in a key fob, comprising:
operating (302) a near field communication, NFC, unit included in the wake-up device in a wake-up receiver mode, in which the NFC unit is configured to receive a wake-up signal from an external NFC device;
providing (304), by the NFC unit, said wake-up signal to a wake-up unit included in the wake-up device;
waking up (306), by the wake-up unit, one or more external functional components in response to receiving the wake-up signal from the NFC unit;
**characterized in that** the method further comprises deriving, by a processing unit included in the wake-up device, a received signal strength indicator, RSSI, from the wake-up signal.
